# EUROPÄISCHE PATENTANMELDUNG

(11) **EP 0 791 680 A2**
(43) Veröffentlichungstag der Anmeldung: **27.08.1997**
(21) Anmeldenummer: 97102373.4
(22) Anmeldetag: 14.02.1997
(51) Int. Cl.: D06L 3/12, C07D 413/02, C07D 405/02, C07D 263/57, C08K 5/00, C08L 57/06

(54) **Mischungen von optischen Aufhellern für Kunststoffe**

(30) Priorität: 24.02.1996 DE 19607046
(71) Anmelder: HOECHST AKTIENGESELLSCHAFT, 65929 Frankfurt am Main (DE)
(72) Erfinder: Martini, Thomas, Dr., 65779 Kelkheim (DE); Rothe, Petra, Dr., 64625 Bensheim-Auerbach (DE); Zirkenbach, Gerhard, 65385 Rüdesheim (DE)

(57) **Zusammenfassung**

Mischungen von optischen Aufhellern enthaltend einen oder mehrere Aufheller der Formel 1 und 1a 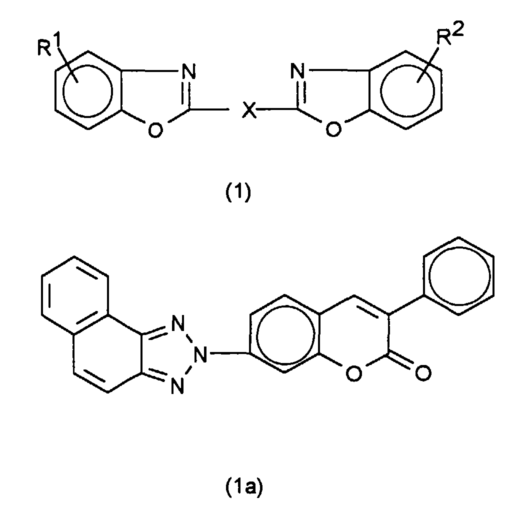 sowie einen oder mehrere Aufheller der Formel 2 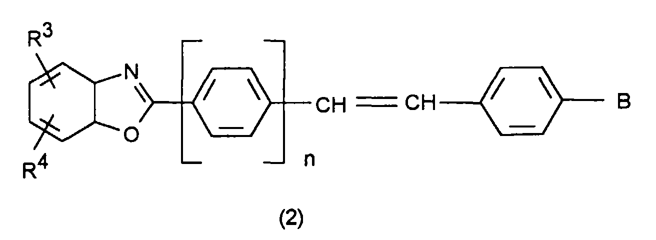 wobei die Substituenten in den Formeln 1 und 2 die in der Beschreibung aufgeführte Definition haben. Diese Aufhellermischungen zeigen synergistische Weißgrade in Kunststoffen.

## Beschreibung

Synergistische Effekte beim Einsatz von Mischungen von optischen Aufhellern zum Aufhellen von Polyester-Textilmaterialien sind bekannt und werden in der Textilindustrie vielfach benutzt um Effektsteigerungen und Kosteneinsparungen zu erzielen. Hier ist offensichtlich der Synergieeffekt durch die Art der textilen Applikation, d.h. durch die Anwendung der Aufhellermischung in dispergierter Form nach dem Ausziehverfahren oder Klotz-Thermosol-Verfahren bedingt. Eine Zusammenfassung der Literatur und Interpretation des Synergismus wird in Melliand Textilberichte (65) 1984, 327-329 wiedergegeben.

Auf dem Gebiet der Aufhellung von Kunststoffen konnte ein Synergismus bisher nicht nachgewiesen werden. Weißeffektsteigerung durch eine Kombination ausgewählter optischer Aufheller, wobei die Mischungen annähernd gleiche oder höhere Weißgrade zeigen als die bessere oder beste Einzelkomponente in jeweils gleichen Mengen, sind bei Kunststoffen unbekannt.

Überraschenderweise wurde nun gefunden, daß sich mit speziellen Aufhellertypen wie im folgenden definiert auch bei Kunststoffen synergistische Effekte erreichen lassen. Hierbei handelt es sich um Mischungen von Aufhellern mit einer mehr rötlichen Nuance und Aufhellern mit einer mehr blauen Nuance.

Gegenstand der Erfindung sind Mischungen von optischen Aufhellern enthaltend einen oder mehrere Aufheller der Formeln 1 und 1a 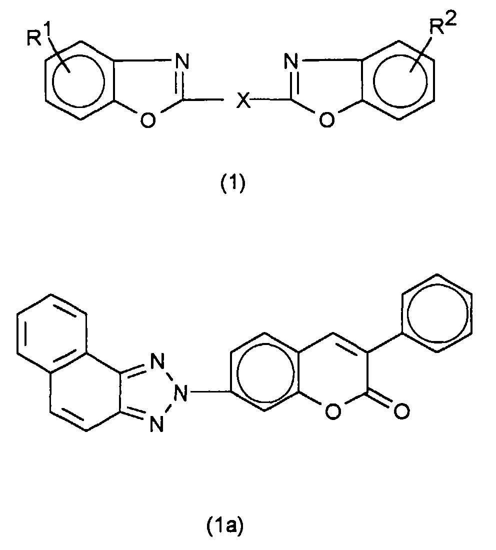 worin R¹ und R² Wasserstoff, C₁-C₁₀-Alkyl oder Carbo-C₁-C₄-alkoxy und x 1,4-Naphthylen, 2,5-Thiophen oder 2,5-Furan bedeuten sowie einen oder mehrere Aufheller der Formel 2 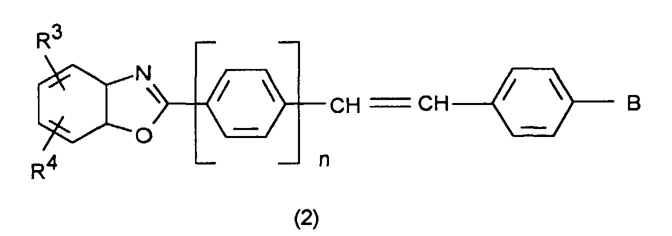 worin R³ in 5-Stellung Wasserstoff oder Halogen, C₁-C₄-Alkyl oder Phenyl und R⁴ Wasserstoff bedeuten oder R³ und R⁴ in 5- und 6-Stellung oder in 5- und 7-Stellung jeweils eine Methylgruppe bedeuten, n 0 oder 1 ist und B Cyan, Carbo-C₁-C₄-alkoxy oder eine Gruppe der Formeln 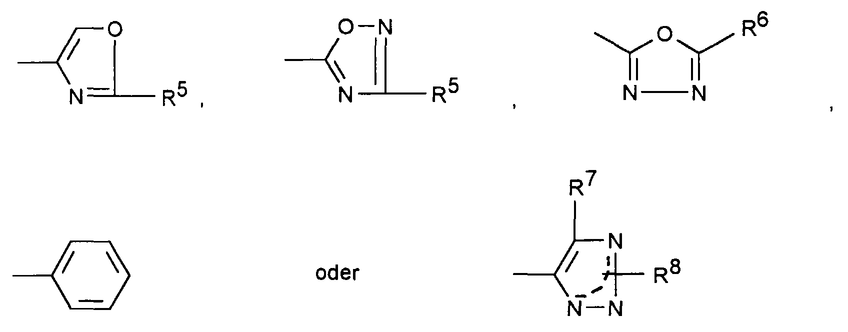 bedeuten, worin R⁵ C₁-C₆-Alkyl, C₁-C₈-Halogenalkyl, C₁-C₄-Alkoxy-C₁-C₄-alkyl, Hydroxy-C₁-C₄-alkyl oder eine Gruppe der Formel -(CH₂CH₂O)ₙ-R', n 2 oder 3, R' Wasserstoff oder C₁-C₄-Alkyl, R⁶ Phenyl, Halogenphenyl, C₁-C₄-Alkylphenyl oder C₁-C₄-Alkoxyphenyl, R⁷ Cyano oder Carbo-C₁-C₄-alkoxy und R⁸ C₁-C₄-Alkyl bedeutet.

Soweit die zuvor definierten Aufheller Alkylgruppen oder substituierte Alkylgruppen enthalten, sind solche mit 1 bis 4 C-Atomen bevorzugt. Als Halogen ist Chlor bevorzugt.

Das Mischungsverhältnis der Aufheller (1) und/oder (1a) zu dem Aufheller (2) kann innerhalb weiter Grenzen variiert werden, beispielsweise von 1 bis 99 Gew.-% des einen Aufhellertyps und der entsprechenden Menge des anderen Aufhellertyps. Bevorzugt sind Mischungen von jeweils 20 - 80 Gew.-% des einen und 80 - 20 Gew.-% des anderen Aufhellertyps.

Mit den erfindungsgemäßen Aufhellermischungen ergeben sich synergistische Weißgradeffekte bei allen bekannte Kunststoffen, wie sie durch Polymerisation, Polyaddition oder Polykondensation hergestellt werden. Beispiele hierfür sind Polyolefine, Polyacetate, Polyamide, Polystyrol, Polyvinylchlorid. In Frage kommen auch Copolymerisate mit unterschiedlichen Arten und Anteilen von Monomeren.

Ganz besonders ausgeprägt ist der Synergismus einer überadditiven Weißgradsteigerung bei Polyvinylchlorid und Homo- und Copolymerisaten aus Ethylen und Vinylacetat, wobei die beiden Monomeren in jeder gewünschten Menge copolymerisiert sein können. Auch die Einpolymerisation mehrerer Monomere ist hier möglich, ebenso wie Abmischungen mit anderen Kunststoffen.

Die mit der erfindungsgemäßen Mischung aufzuhellenden Polymere können je nach Molekulargewicht von flüssiger oder fester Beschaffenheit sein. Selbstverständlich können bei der Herstellung und Formulierung dieser Kunststoffe die hierfür üblichen Zusatzadditive, wie z.B. Titandioxid, Zinkoxid, Kreide, Stearinsäure, Pigmente, Weichmacher, Gleitmittel, Hitze- und Lichtstabilisatoren, Antioxidantien, gasabspaltende Substanzen (Schäumer) hinzugegeben werden.

Diese Additive verleihen dem Kunststoff seine gewünschte Beschaffenheit und führen zum Endprodukt. Endprodukte dieser Art findet man als Schuhsohlen, in der Elektroindustrie (Kabelummantelungen), bei der Raum- und Möbelausstattung, bei Kleidung, in der Kosmetikindustrie, der Fotoindustrie sowie als Folien, Profile, Dichtungen und in vielen anderen Anwendungsgebieten des täglichen Bedarfs.

Neben der synergistischen Weißgradsteigerung besteht ein weiterer Vorteil der erfindungsgemäßen Aufhellermischungen darin, daß sie im Vergleich zu den Einzelsubstanzen ein deutlich gesteigertes Aufbauvermögen aufweisen. Dies bedeutet, daß mit einer Mischung wesentlich mehr Aufheller in dem Kunststoff aufgelöst und damit höhere Weißeffekte erzielt werden können als beim Einsatz der Einzelkomponenten.

Die Zugabe der erfindungsgemäßen Aufhellermischung kann bereits vor der Polymerisation erfolgen, indem man das Aufhellergemisch in Monomeren, z.B. Vinylacetat auflöst. Eine andere Möglichkeit besteht darin, daß die Aufhellermischung auf das fertige Polymer aufgebracht wird, z.B. durch Auftrommeln, gegebenenfalls mit weiteren Additiven, wie z.B. Weichmacher, Titandioxid, Stabilisatoren, Schäumer und die so erhaltene Mischung einem Thermoprozeß entsprechend der Verarbeitungstemperatur des betreffenden Kunststoffes unterwirft. Dabei wird die erfindungsgemäße Aufhellermischung im Kunststoff gelöst oder verteilt. Die Menge der einzusetzenden Aufhellermischung für weiße Artikel variiert von 1 ppm bis 5000 ppm. Höhere Mengen können durchaus eingesetzt werden, wenn man sogenannte Vorkonzentrate (masterbatches) herstellen will, welche später dann mit weiterem Kunststoffmaterial verdünnt werden können. Hier kann der Aufhelleranteil, bezogen auf den aufzuhellenden Kunststoff, 1 bis 30 Gew.-% und mehr betragen. Selbstverständlich kann die Aufhellermischung mit anderen Additiven vorgemischt und dann dem Kunststoff zugegeben werden. Geringe Mengen (z.B. 1 - 5 ppm) an der erfindungsgemäßen Aufhellermischung ergeben unter Tageslicht weniger ausgeprägte Weißeffekte, die jedoch ausreichen, den natürlichen Gelbton des Kunststoffes zu kompensieren, oder aber unter UV-Licht als Indikator verwenden werden können.

### Beispiel 1

50 g eines Copolymerisat-Granulats aus Ethylen und Vinylacetat mit einem Anteil von Vinylacetat von 50 % wurden mit einer Mischung, bestehend aus 0,36 g Dioctylphthalat, 0,25 g TiO₂ (Anatas), 0,5 g Stearinsäure sowie 25 mg eines Aufhellers der Formel 1 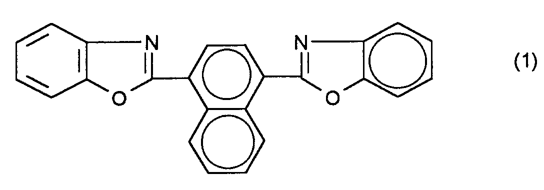 homogen miteinander vermischt und anschließend zwischen zwei geheizten Walzen (Walzenstuhl), wobei eine Walze auf 90°C und die zweite Walze auf 100°C gebracht wurden, während 10 min. behandelt. Die abzuziehende EVA-Folie ist sehr gut optisch aufgehellt mit einem Weißgrad von 210 Einheiten nach der Formel von Ganz.

### Beispiel 2

Es wurde wie bei Beispiel 1 gearbeitet, jedoch mit 25 mg einer Verbindung der Formel 2 als Aufheller

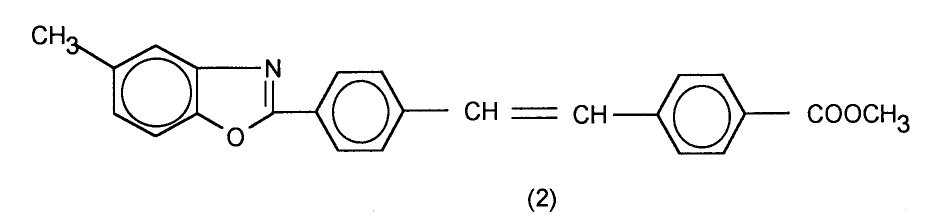

Die erzielten Weißeffekte betragen 176 Weißgradeinheiten nach der Formel von Ganz.

### Beispiel 3

Es wurde wie bei Beispiel 1 gearbeitet.
Als optischer Aufheller wurde eine Mischung, bestehend aus 20 mg des Aufhellers 1 aus Beispiel 1 und 5 mg des Aufhellers 2 aus Beispiel 2 genommen. Es wurden hervorragende Weißeffekte von 215 Weißgradeinheiten nach Ganz erhalten.

### Beispiel 4

Es wurde wie bei Beispiel 3 gearbeitet.
Als optischer Aufheller wurden 20 mg des Aufhellers 1 aus Beispiel 1 und 5 mg des Aufhellers der Formel 3 genommen

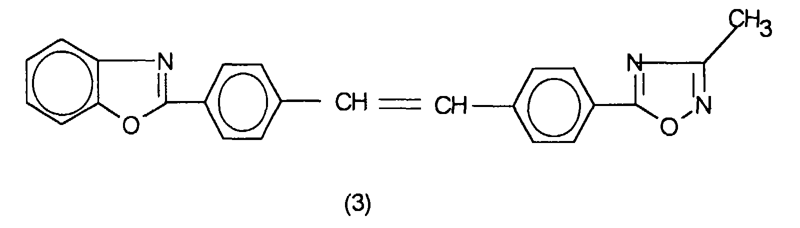

Es wurden ausgezeichnete Weißeffekte von 212 Weißgradeinheiten nach Ganz erzielt.

### Beispiel 5

Es wurde wie in Beispiel 3 gearbeitet.
Als optischer Aufheller wurden 25 mg des Aufhellers 3 aus Beispiel 4 genommen. Die Aufhelleffekte lagen deutlich niedriger als bei Beispiel 4 und haben einen grünlichen Schimmer.

### Beispiel 6

Es wurde wie bei Beispiel 1 gearbeitet.
Als optischer Aufheller wurde eine Mischung, bestehend aus 20 mg der Verbindung der Formel 4 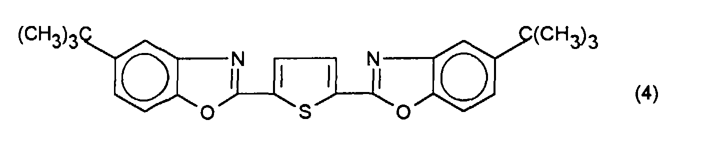 und 5 mg des Aufhellers 2 aus Beispiel 2 gewonnen.

Die erzielten Aufhellereffekte sind sichtbar besser als die Effekte, welche erhalten werden, wenn nur 25 mg des Aufhellers 4 oder nur 25 mg des Aufhellers 2 aus Beispiel 2 verwendet werden.

### Beispiel 7

Auf 50 g Polyethylenpellets (LDPE) wurden durch Auftrommeln einer Mischung aus 0,25 g TiO₂ (Rutil) und 3 mg des Aufhellers 2 aus Beispiel 2 sowie 12 mg des Aufhellers 1 aus Beispiel 1 gleichmäßig verteilt und anschließend bei 220°C in einer Spritzgußmaschine verarbeitet. Die erhaltenen Formmassen zeichnen sich durch hohe Weißeffekte aus. Nach der Formel von Ganz wurden 136 WG-Einheiten gemessen.

### Beispiel 8

Es wurde wie bei Beispiel 7 gearbeitet.

Als Aufheller wurden jedoch 15 mg des Aufhellers aus Beispiel 1 genommen. Die erzielten Weißeffekte betrugen nach Ganz 134 WG-Einheiten.

### Beispiel 9

Es wurde wie bei Beispiel 7 gearbeitet.

Als Aufheller wurden jedoch 15 mg des Aufhellers 2 aus Beispiel 2 genommen. Die erzielten Weißeffekte betrugen nach Ganz 112 WG-Einheiten.

### Beispiel 10

Es wurde wie bei Beispiel 3 gearbeitet.

Als optischer Aufheller wurde eine Mischung aus 20 mg des Aufhellers 1a und 5 mg des Aufhellers 2 aus Beispiel 2 genommen. Die erzielten Aufhelleffekte sind sichtbar besser als beim Einsatz von 25 mg der Verbindung 1a. Auch bei Verwendung von 25 mg des Aufhellers 2 aus Beispiel 2 wurden schlechtere Weißeffekte erzielt als bei der Mischung.

### Beispiel 11

Eine Mischung bestehend aus
72,37 Gew.-Teile PVC-Pulver
25,00 Gew.-Teile eines Weichmachers (Dioctylphthalat)
2,00 Gew.-Teile TiO₂ (Rutil)
0,10 Gew.-Teile PE-Wachs
und 1,50 Gew.-Teile eines Stabilisators
wurden jeweils mit 300 ppm eines Aufhellers
a) der Formel 1 aus Beispiel 1,
b) einer Mischung aus 250 ppm des Aufhellers 1 aus Beispiel 1 und 50 ppm des Aufhellers 2 aus Beispiel 2
c) 300 ppm des Aufhellers aus Beispiel 2
auf dem Walzenstuhl bei 135°C über eine Dauer von 10 min behandelt. Das entsprechend abgezogene Walzfell zeigte jeweils folgende Weißeffekte nach der Formel von Ganz:
a) 135 WGE
b) 137 WGE
c) 125 WGE.

## Patentansprüche

1. Mischungen von optischen Aufhellern enthaltend einen oder mehrere Aufheller der Formel 1 und 1a 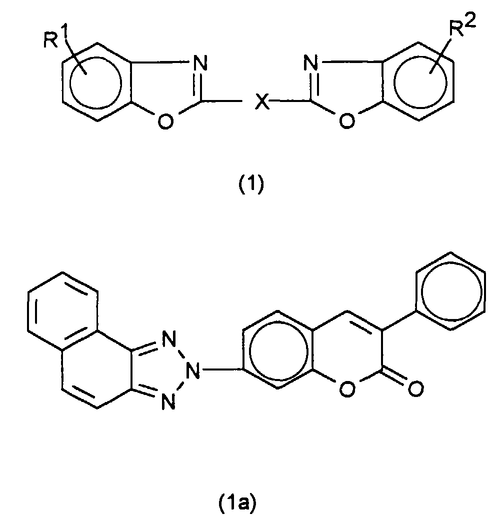 worin R¹ und R² Wasserstoff, C₁-C₁₀-Alkyl oder Carbo-C₁-C₄-alkoxy und X 1,4-Naphthylen, 2,5-Thiophen oder 2,5-Furan bedeuten, sowie einen oder mehrere Aufheller der Formel 2 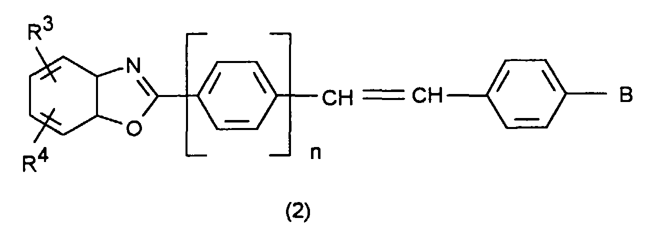 worin R³ in 5-Stellung Wasserstoff oder Halogen, C₁-C₄-Alkyl oder Phenyl und R⁴ Wasserstoff bedeuten oder R³ und R⁴ in 5- und 6-Stellung oder in 5- und 7-Stellung jeweils eine Methylgruppe bedeuten, n 0 oder 1 ist und B Cyan, Carbo-C₁-C₄-alkoxy oder eine Gruppe der Formeln 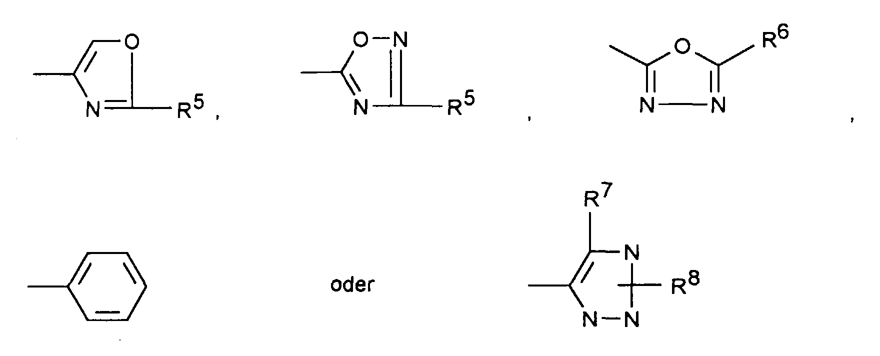 bedeuten, worin R⁵ C₁-C₆-Alkyl, C₁-C₈-Cycloalkyl, C₁-C₄-Alkoxy-C₁-C₄-alkyl, Hydroxy-C₁-C₄-alkyl oder eine Gruppe der Formel -(CH₂CH₂O)ₙ-R', n 2 oder 3, R' Wasserstoff oder C₁-C₄-Alkyl, R⁶ Phenyl, Halophenyl, C₁-C₄-Alkylphenyl oder C₁-C₄-Alkoxyphenyl, R⁷ C₁-C₄-Alkyl und R⁸ Cyano oder Carbo-C₁-C₄-alkoxy bedeutet.

2. Verwendung der Mischungen von optischen Aufhellern nach Anspruch 1 zum Aufhellen von Kunststoffen.

3. Verwendung der Mischungen von optischen Aufhellern nach Anspruch 1 zum Aufhellen von Polyvinylchlorid und Homo- und Copolymerisaten aus Ethylen und Vinylacetat.

4. Verwendung der Mischungen von optischen Aufhellern nach Anspruch 1 zum Aufhellen von Kunststoffen in einer Menge von 1 bis 5000 ppm.

5. Verwendung der Mischungen von optischen Aufhellern nach Anspruch 1 zum Aufhellen von Kunststoffen, dadurch gekennzeichnet, daß die Mischungen der optischen Aufheller in Form eines Masterbatches mit einem Gehalt der optischen Aufheller insgesamt von 1 bis 30 Gew.-% eingesetzt werden.
